# EUROPEAN PATENT APPLICATION

(11) **EP 3 739 539 A1**
(43) Date of publication of application: **18.11.2020**
(21) Application number: 19174910.0
(22) Date of filing: 16.05.2019
(51) Int. Cl.: G06Q 20/32, G01S 5/02

(54) **MAPPING RADIO DATA LAYERS OF RADIO MAP TO FLOOR IDENTIFIERS**

(71) Applicant: HERE Global B.V., 5611 ZT Eindhoven (NL)
(72) Inventor: WIROLA, Lauri Aarne Johannes, 33100 Tampere (FI); IVANOV, Pavel, 33100 Tampere (FI); NURMINEN, Henri Jaakko Julius, 33100 Tampere (FI)
(74) Representative: Cohausz & Florack

(57) **Abstract**

The invention inter alia describes a method, performed by at least one apparatus, the method comprising: obtaining payment transaction information pertaining to a mobile payment transaction event with a mobile device; obtaining radio measurement data representative of a radio environment at a location of the mobile payment transaction event; associating the payment transaction information and the radio measurement data; and providing the payment transaction information and the associated radio measurement data for mapping radio data layers of a radio map to floor identifiers.

## Description

### FIELD OF THE INVENTION

The invention relates to the field of positioning. Particularly, the invention describes ways of using radio maps and geographic maps in particular for indoor positioning. More specifically, the invention relates to the improvement of the compatibility between radio maps and geographic maps.

### BACKGROUND OF THE INVENTION

Indoor positioning requires novel systems and solutions that are specifically developed and deployed for this purpose. The "traditional" positioning technologies, which are mainly used outdoors, i.e. satellite and cellular positioning technologies, cannot deliver such performance indoors that would enable seamless and equal navigation experience in both environments. The required positioning accuracy (2-3 m), coverage (-100%) and floor detection are challenging to achieve with satisfactory performance levels with the systems and signals that were not designed and specified for the indoor use cases in the first place. Satellite-based radio navigation signals simply do not penetrate through the walls and roofs for the adequate signal reception and the cellular signals have too narrow bandwidth for accurate ranging by default.

Several indoor-dedicated solutions have already been developed and commercially deployed during the past years e.g. solutions based on technologies like pseudolites (GPS-like short-range beacons), ultra-sound positioning, Bluetooth or Bluetooth LE signals and Wi-Fi fingerprinting. What is typical to these solutions is that they require either deployment of totally new infrastructure (such as beacons or tags) or manual exhaustive radiosurveying of the buildings including all the floors, spaces and rooms. This is rather expensive and will take a considerable amount of time to build the coverage to the commercially expected level, which can in some cases narrow the potential market segment to only a very thin customer base e.g. for health care or dedicated enterprise solutions. Also, the diversity of these technologies makes it difficult to build a globally scalable indoor positioning solution, and the integration and testing will become complex if a large number of technologies needs to be supported in the consumer devices, such as smartphones.

For an indoor positioning solution to be commercially successful it needs to be globally scalable, have low maintenance and deployment costs, and offer acceptable end-user experience. This can best be achieved, if the solution is based on an existing infrastructure in the buildings and on existing capabilities in the consumer devices. Accordingly, the indoor positioning needs to be based on technologies like Wi-Fi- and/or Bluetooth (BT)-technologies that are already supported in almost every smartphone, tablet, laptop and even in the majority of the feature phones. It is, thus, required to find a solution that uses such radio signals in such a way that makes it possible to achieve 2-3 m horizontal positioning accuracy, close to 100% floor detection with the ability to quickly build the global coverage for this approach.

One approach for radio-based indoor positioning models the radio environment (generated by e.g. Wi-Fi, Bluetooth or any similar radio signals) from observed radio measurements (e.g. received signal strength (RSS)-measurements) as 2-dimensional radio maps and is hereby able to capture the dynamics of the indoor radio propagation environment in a compressible and highly accurate way. This makes it possible to achieve unprecedented horizontal positioning accuracy with the radio signals only within the coverage of the created radio maps and also gives highly reliable floor detection.

In addition to the above described approach of manually radio surveying a region, huge volumes of indoor radio signal measurement data (so called fingerprints) can be harvested via the approach of crowdsourcing, if the consumer devices are equipped with the necessary functionality to enable the t radio signal data collection, e.g. as an automatic background process, naturally with the end-user consent. It could also be possible to use volunteers to survey the sites (buildings) in exchange of reward or recognition and get the coverage climbing up globally in the places and venues important for the key customers. However, the technical challenges related to the harvesting, processing, redundancy, ambiguity and storing the crowd-sourced data need to be understood and solved first, before the radio map creation can be based on the fully crowdsourced data.

For instance, when crowd-sourcing radio data e.g. for indoor positioning purposes, the automated methods can learn the building radio data layers. As an example, tracks with 3D reference positions including absolute altitudes, which are contained by the crowd-sourced radio data, may be utilized for this. Therein, each track may be divided into track sections that can, based on the altitude readings, be assumed to be in a single floor level. The horizontal shape of each track section can then be compared with the indoor map geometry of each floor level, so that, for each track section, the track section's altitude can then be assigned to the floor level(s) whose horizontal geometry matches/match best with the horizontal shape of the track section. However, the missing part is the connection between the abstract indexing of these radio data layers of radio maps with the actually used floor level identifiers that are meaningful to humans.

Because indoor maps use the human-readable floor levels identifiers, the lack of such an association can mean in the worst case that it may not be possible to present the correct floor of the indoor map to the user, when using indoor positioning. This is due to the fact that the technology of indoor positioning utilizing radio maps is typically not aware of the human-readable floor level identifiers, but instead works with an abstract layer indexing, which is decoupled from the real-world floor numbering/naming/indexing that is visible in the building and is used in indoor maps.

One possibility to overcome this problem is to obtain this association by manual data collection, wherein the association between the correct floor identifier and the abstract layer of the radio map is done manually as part of the manual data collection process.

In view of the above, it is inter alia an object of the invention to provide an efficient approach to reliably enable the presenting of the correct floor of a map during a radio map based positioning. It is also an object to enable the use of real-world and human-readable floor identifiers during a radio map based positioning process, specifically in case the data collection for the radio map is at least partially based on automatic crowd-sourcing.

### SOME EXAMPLE EMBODIEMNTS OF THE INVENTION

According to a first exemplary aspect of the invention, a method (also referred to as first method) is disclosed, performed by at least one apparatus, the method comprising:
- obtaining payment transaction information pertaining to a mobile payment transaction event with a mobile device;
- obtaining radio measurement data representative of a radio environment at a location of the mobile payment event;
- associating the payment transaction information and the radio measurement data; and
- providing the payment transaction information and the associated radio measurement data for mapping radio data layers of a radio map to floor identifiers.

The first method is preferably performed and/or controlled at least by a mobile device (e.g. the mobile device performing the mobile payment transaction event). However, generally, the at least one apparatus may be or comprise an apparatus according to any of the exemplary aspects as described in more detail below.

According to a second exemplary aspect of the invention, a method (also referred to as second method) is disclosed, performed by at least one apparatus, the method comprising:
- obtaining payment transaction information pertaining to a mobile payment transaction event with a mobile device and associated radio measurement data representative of a radio environment at a location of the mobile payment transaction event; and
- using the payment transaction information and the associated radio measurement data for mapping one or more radio data layers of a radio map to one or more floor identifiers.

The second method may for instance be performed and/or controlled at least by a server. However, generally, the at least one apparatus may be or comprise an apparatus according to any of the exemplary aspects as described in more detail below.

According to a further exemplary aspect of the invention, an apparatus is disclosed comprising means for performing a method according to any exemplary aspect. The means of the apparatus may be implemented in hardware and/or software. They may comprise for instance at least one processor for executing computer program code for realizing the required functions, at least one memory storing the program code, or both. Alternatively, they could comprise for instance circuitry that is designed to realize the required functions, for instance implemented in a chipset or a chip, like an integrated circuit. In general, the means may comprise for instance one or more processing means such as a processor and a memory. Optionally, the apparatus may comprise various other components, like a communication interface, a network interface, a radio interface, a data interface, a user interface etc. For instance, the apparatus may comprise at least one processor and at least one memory including computer program code; the at least one memory and the computer program code configured to, with the at least one processor, cause the apparatus to at least perform a method according to any exemplary aspect of the invention.

The disclosed apparatuses according to any aspect of the invention may be a module or a component for a device, for example a chip. Alternatively, the disclosed apparatus according to any aspect of the invention may be a device, for instance a mobile device or a server. The disclosed apparatus according to any aspect of the invention may comprise only the disclosed components, for instance means, processor, memory, or may further comprise one or more additional components. According to a further exemplary aspect of the invention, a computer program code is disclosed, the computer program code, when executed by a processor, causing an apparatus to perform a method according to any exemplary aspect. The computer program may be stored on a computer-readable storage medium, in particular a tangible and/or non-transitory medium. The computer readable storage medium could for example be a disk or a memory or the like. The computer program could be stored in the computer readable storage medium (e.g. according to the exemplary aspect of the invention described below) in the form of instructions encoding the computer-readable storage medium. The computer readable storage medium may be intended for taking part in the operation of a device, like an internal or external memory, for instance a Read-Only Memory (ROM) or hard disk of a computer, or be intended for distribution of the program, like an optical disc.

According to a further exemplary aspect of the invention, a non-transitory computer readable storage medium is disclosed, in which computer program code is stored, the computer program code when executed by a processor causing at least one apparatus to perform a method according to any exemplary aspect. The storage medium may be a tangible storage medium, for example a tangible computer-readable storage medium. The storage medium may be a storage medium of a mobile device or server, for example an apparatus according to any exemplary aspects of the invention.

In the following, exemplary features and exemplary embodiments of all aspects of the present invention will be described in further detail.

As already described, the exemplary first method may in particular be performed by the mobile device used for or involved in the mobile payment transaction event, while the exemplary second method may be performed by a remote server. Thus, the mobile device may in particular provide (e.g. send) the payment transaction information and the associated radio measurement data to the server, which in turn obtains (e.g. receives) the payment transaction information and the associated radio measurement data. In this regard it is noted, that a combination of the first and second exemplary aspects is also understood to be disclosed. That is, for instance a combination of the first and second exemplary methods e.g. performed by a single apparatus or by a system of a first and second apparatus (such as a mobile device and a server) is also understood to be disclosed.

A mobile payment transaction event or simply a mobile payment (also referred to as mobile money transfer, for instance) is generally understood to refer to payment services operated under financial regulation and performed from or via a mobile device. Instead of paying with cash, cheque, or credit cards, a consumer uses a mobile device to pay for a wide range of services and digital or hard goods.

The mobile payment transaction event may thus be understood to pertain to a payment or transaction between a mobile device (or more precisely the user thereof) on the one side and on the other side another entity, such as another person, a business, a shop, a restaurant, a bank, a cashpoint, a gas station, a parking garage,. In a mobile payment transaction event, the user may for instance need to bring the mobile device into the proximity of a terminal or communication device at the respective point of interest, so that data can be exchanged with the mobile device. A mobile payment transaction event can generally be realized in different ways, in particular by means of a mobile wallet, i.e. the mobile device contains e.g. debit or credit card information of the user. Typically the payment process comprises a contactless payment via short range radio technologies such as RFID and/or NFC and/or Bluetooth.

Payment transaction information comprises information pertaining to the mobile payment transaction event. For instance, the payment transaction information may comprise information about the payer (i.e. typically the user of the mobile device) and/or the payee or recipient (e.g. a business). For instance, the transaction information may comprise an identifier (so called "transaction ID") identifying the mobile payment transaction event.

The radio measurement data may in particular comprise one or more radio measurement results of radio signals observable by the mobile device, as will be described in more detail below. The radio measurements may be taken in spatial and preferably also in temporal proximity to the mobile payment transaction event, so as to be considered representative of the radio environment at the location of the mobile payment transaction event.

An association of the payment transaction information and the radio measurement data may for instance be realized by identifiers or a data structure indicating the association between the payment transaction information and the radio measurement data. This association is preferably preformed in the first exemplary method, e.g. by a mobile device performing the first exemplary method. However, in an alternative approach it may generally be possible that the association is performed by another device and/or at a later point in time. For instance, the payment transaction information and the radio measurement data may both comprise a time stamp. The payment transaction information and the radio measurement data may then be associated based on their respective time stamps, i.e. in case the time indicated by the respective time stamps is identical or sufficiently similar (e.g. below a predetermined threshold).

In the first exemplary method the payment transaction information and the associated radio measurement data is provided (e.g. sent to a back end server system) for mapping radio data layers of a radio map to floor identifiers.

In general, a radio map may be understood as a collection of radio models (or radio images) of radio nodes (e.g. access points) within a certain region. A radio map may in some examples include exact location information of respective nodes. In other examples, the location information may be less specific and may, for instance, only indicate a coverage area of a respective node. As such, the location information may be, broadly-speaking, described as a geographical reference for each node of the radio environment in a certain region. Radio data may now be understood as data pertaining to such a radio map (e.g. either data constituting such a radio map or data allowing for generating such a radio map, such as radio fingerprints).

The radio map may in particular at least partially be based on crowdsourced radio data (e.g. radio fingerprints). Crowdsourced data is in particular understood as data which is collected by a large group of users (such as thousands, hundred thousands, millions of users/devices or even more). The collection may in particular be performed automatically and a manual input of a user may not be required. Specifically with respect to radio data, the position information (e.g. for the collection of radio fingerprints) may in particular be collected automatically without any manual user input. Crowdsourced data may further have the property of a data that is collected- at least to some degree - randomly, aimlessly and/or by chance. The advantage of crowdsourced radio data and crowdsourced radio maps is that large amounts of data can be acquired automatically. However, due to the automatic data acquisition the radio data and the radio map is typically not aware of different floors in a building. While radio data layers may be identified in the radio data or radio maps, there is still the problem that these radio data layers need to be correctly allocated to the floor identifiers actually used in the physical world.

In the present case, the radio map may in particular be an indoor radio map, e.g. a radio map of a building, such as a public building, for instance an office building or a mall.

A radio data layer is understood as an abstract layer within a radio map. The radio data layer may only have a meaning within the framework of the radio data or the radio map. Thus, a radio data layer does normally not have a meaning in the real world with respect to actually used floor identifiers. Thus, a radio data layer can be understood as an internal numbering or referencing system of layers in a radio map. These radio data layers may be determined based on the collected radio data. For instance, collected radio data may comprise (approximate) radio node locations, which may be clustered into groups with the same or similar vertical positions or altitudes. Each of these groups may then form a respective radio data layer, which generally corresponds to or correlates with a certain real world floor level. Thus, a radio data layer can be understood as an abstract (horizontal) layer determined in the radio map or the radio data. Radio node layers may simply be referenced by continuous integers (such as "1", "2", "3", "4", "5",...) or similar naming schemes (e.g. "L1", "L2", "L3", "L4", "L5",...). However, a mapping between these radio data layers and the real world floor identifiers is generally unknown or may be non-trivial.

As already mentioned, a floor identifier is understood to identify a floor in the real or physical world; in contrast to a radio data layer. A floor identifier may in particular be human-understandable or -readable, such that a human typically knows simply by the identifier, which floor it is typically supposed to denote. In other words, a floor identifier is understood to be meaningful to an end user of a positioning device. A floor identifier may comprise numbers and/or letters, for instance. An example of typical floor identifiers of a building are "B3", "B2", "B1", "UG", "G", "1 ", "2", "3",... . The floor identifiers are typically the ones used within an (geographic) indoor map of a building. Thus, a floor identifier may also be understood as identifiers used by an indoor map.

In the second exemplary method, the payment transaction information and the associated radio measurement data is obtained and used for mapping one or more radio data layers of the radio map to one or more floor identifiers. This process is typically done on a server system, since the mobile device involved in the mobile payment transaction event and/or taking the radio measurements is typically not capable of such a mapping, e.g. because the required information may not be available at the mobile device. The mapping may also be performed more efficiently and/or accurately at a server, which obtains payment transaction information and associated radio measurement data for a plurality of cases from a plurality of devices, which enables statistical approaches to be used.

By providing and using, respectively, the payment transaction information and the associated radio measurement data for mapping radio data layers of a radio map to floor identifiers, it is possible to determine, for a position estimate, the correct floor identifier which has a meaning within the frame of an indoor map and for the end user, even though the position estimate is determined based on a radio map, which is generated on automatically crowd-sourced radio data. As a result, a user can be presented with the correct and meaningful floor identifier and with the correct floor of an indoor map using floor identifiers for referencing the respective floors of the indoor map.

This is possible, since the payment transaction information can allow for identifying a floor identifier (which will be described in more detail below) while the radio measurement data allows for identifying the corresponding radio data layer at a location of (or close to) the mobile payment transaction event. The association between the payment transaction information and the radio measurement data allows for mapping respective radio data layers and floor identifiers. Thus, the invention advantageously utilizes payment transaction information for mapping radio data layers and floor identifiers.

According to an exemplary embodiment of the different aspects of the invention, the method further comprises:
- performing, by the mobile device, the mobile payment transaction.

The mobile device (which may perform the first exemplary method) preferably also performs the mobile payment transaction. As already explained, the mobile payment transaction may be realized by means of a mobile wallet (e.g. the mobile device contains debit or credit card information of the user) and/or may be implemented in the mobile device by a contactless payment technology, e.g. via a short range radio technology (e.g. via NFC). For instance, an EMV (Europay International, MasterCard and VISA) chip card or smart card (such as a credit or debit card) is virtualized on the mobile device, for instance by means of Host Card Emulation technology, which allows transferring the card to an NFC chip of the mobile device (such as a smart phone or smart watch). When the mobile device performs the mobile payment transaction, the mobile device has access to the relevant payment transaction information. In an example, the mobile payment event may trigger the mobile device to perform a radio measurement or use a recently performed radio measurement in order to obtain radio measurement data for the purpose of the present invention.

According to an exemplary embodiment of the different aspects of the invention, the payment transaction information comprises one or more of:
- information representative of a name of a transaction partner involved in the mobile payment transaction event;
- information representative of a name of a business, at which the mobile payment transaction event took place;
- information representative of a location, at which the mobile payment transaction event took place;
- an identifier of the mobile payment transaction event; and/or
- a time of the mobile payment transaction event.

Information representative of a name of a transaction partner involved in the mobile payment transaction event may for instance be or comprise a string with the name or a part of the name or an abbreviation of the name of the transaction partner. The transaction partner may be a payee (transaction recipient) or a payer.

Information representative of a name of a business, at which the mobile payment transaction event took place, may for instance comprise a string with the name or a part of the name or an abbreviation of the name of the business. The term business is to be understood broadly and may in particular denote a shop, a store, an enterprise, a restaurant, a bank, a cashpoint, a gas station, a parking garage or the like.

Information representative of a location, at which the mobile payment transaction event took place, may for instance be or comprise a string with an address or a part thereof. For instance, sometimes the name of the business also comprises a part of the address such as the city, district or street (e.g. as a name affix). Such information may at least provide a hint at the location of the place, at which the mobile payment transaction event took place. For instance, such information may help reducing the search space in a database, as described further below.

A time of the mobile payment transaction event may be a time stamp for instance. The time stamp may indicate the year, month, day and/or time of day of the mobile payment transaction event.

An identifier of the mobile payment transaction event (also referred to as "transaction ID") may be a numeric or an alphanumeric code, for instance. The identifier may uniquely identify the mobile payment transaction. For instance, the transaction ID may allow obtaining further information on the transaction (e.g. one or more of the pieces of information described above) even if the transaction information only comprises the transaction ID. Such further information may be obtained through the used payment system, e.g. via a bank interface.

Each of the described pieces of information may allow or facilitate the determination of a floor identifier and thus the mapping of radio data layers of a radio map to floor identifiers.

According to an exemplary embodiment of the different aspects of the invention, the method further comprises:
- taking one or more radio measurements by the mobile device coinciding with the mobile payment transaction event, the radio measurement data comprising the one or more radio measurements.

A radio measurement coinciding with the mobile payment transaction event may generally be taken before, after or during the mobile payment transaction event. It may only be required that the radio measurement is within a certain temporal (and thus spatial) proximity of the mobile payment transaction event. For instance, the mobile payment transaction event may trigger the mobile device to take one or more radio measurements, i.e. right after the mobile payment transaction event. For instance, the mobile device may be configured such that every time a mobile payment transaction event is performed one or more radio measurements may be taken by the mobile device. Alternatively, the mobile device may take radio measurements on a regular basis and one or more radio measurements right before during, and/or after the mobile payment transaction event may be selected as the radio measurements coinciding with the mobile payment transaction event.

Taking radio measurements by the mobile device coinciding with the mobile payment transaction event may facilitate the mapping of radio data layers of a radio map to floor identifiers, since coinciding information from the radio domain (derivable from the radio measurements) and from the spatial domain (derivable from mobile payment transaction event) can be obtained.

According to an exemplary embodiment of the different aspects of the invention, the one or more radio measurements comprise one or more of:
- an identifier of a radio node emitting an observed radio signal;
- information on a received signal strength of an observed radio signal;
- information on path losses of an observed radio signal;
- information on a timing measurement of an observed radio signal; and/or
- information on an angle of arrival of an observed radio signal.

Generally, the radio measurements may be based on radio signals of a cellular communication system or a non-cellular communication system. Examples of a cellular communication system are a second generation (2G, for instance the Global System for Mobile Communication (GSM), the General Packet Radio System (GPRS), the Enhanced Data Rates for GSM Evolution (EDGE) or the High Speed Circuit-Switched Data (HSCSD)), third generation (3G, for instance the Universal Mobile Telecommunication System, UMTS, WCDMA, TD-SCDMA or CDMA-2000), fourth generation (4G, for instance the Long Term Evolution, LTE system, the LTE Advanced (LTE-A) system or the IEEE 802.16m WiMAX system) or fifth generation (5G) communication system. Examples of a non-cellular communication system are a system according to the IEEE 802.11 standard (WLAN system), a Bluetooth or Bluetooth LE system, a ZigBee system, a radio-frequency identification (RFID) system, a broadcasting network such as for instance Digital Video Broadcasting (DVB), Digital Audio Broadcasting (DAB) or Frequency-Modulated (FM) / Amplitude-Modulated (AM) system, a Near Field Communication (NFC) system, etc.

A cellular communication system may for instance be characterized by a basically seamless pavement of a geographical area (usually in the order of at least hundreds or thousands of square kilometers) with cells in which coverage is provided by respective nodes of the communication system that are operated by the same operator, which network may for instance support communication handover between cells. Consequently, a non-cellular communication system may be characterized as a communication system that does not have all of these properties.

Accordingly, an identifier of a radio node may for instance be a cell identifier in case of a cellular communication system (e.g. UTRAN Cell ID (UC-ID) or an LTE Cell Identity), or a service set identifier (e.g. an SSID or BSSID) or a medium access control (MAC) address in case of a non-cellular communication system. Accordingly, a radio node may be a cellular radio node or an access point or a Bluetooth beacon, for example.

Information on a received signal strength may for instance be a received signal strength indication RSSI or physical Rx level. Information on path losses may be a path loss exponent, for instance. Information on a timing measurement may comprise information representative of a propagation delay, a timing advance (TA) or round-trip time (RTT) or a time difference of arrival (TDOA). Information on an angle of arrival (AoA) of an observed radio signal may be obtained by means of an antenna array, e.g. via the phase difference of a signal at different antennas of an antenna array.

All of the above information can be useful for determining the position of a mobile device based on a radio map and in particular for determining the position of the mobile device in terms of the radio data layer.

According to an exemplary embodiment of the different aspects of the invention, the method further comprises:
- determining a location estimate of the mobile device based on the radio measurement data and a radio map.

In one example, the determining of the location estimate may be performed in the first exemplary method by the mobile device. Alternatively, the location estimate of the mobile device may be determined by a server. For this, the radio measurement data may be provided from the mobile device to a server, e.g. together with payment transaction information and associated radio measurement data. The radio map used may in particular be the radio map for which the mapping of radio data layers to floor identifiers is performed. The location estimate may be a coarse location estimate. The location estimate may be used e.g. for limiting a search space, e.g. within a database, such as a point of interest database, when trying to identify the floor identifier to be mapped, as describe further below. Additionally or alternatively, the location estimate may also be obtained by a GNSS, so that a radio map would not be strictly needed.

According to an exemplary embodiment of the different aspects of the invention, the method comprises:
- based on the payment transaction information, obtaining a name of a business at which the mobile payment transaction event took place.

As already mentioned, a name of a business is understood broadly and a part of the name or an abbreviation of the name may also be understood as a name of a business. Also, the name of a proprietor of a business may be considered as a name of a business, for instance. In one example, the business name or information representative thereof may be (directly) comprised in the payment transaction information, as already mentioned. In another example, the name of the business at which the mobile payment transaction event took place can be (indirectly) obtained based on other information comprised by the payment transaction information. For instance, a transaction ID comprised by the payment transaction information may allow for obtaining the name of the business. For instance, the name of the business may be obtained from the used payment system in combination with the transaction ID, e.g. over a bank interface. In case of multiple mobile payment transaction events, a respective business name may be obtained for each mobile payment transaction event. Obtaining the business name may facilitate obtaining respective floor identifiers to be mapped e.g. from a point of interest database, as described in further detail below.

According to an exemplary embodiment of the different aspects of the invention, the method comprises:
- based on the radio measurement data and a radio map, determining a location estimate of the mobile device.

As described before, the location estimate may alternatively be determined by and obtained from the mobile device performing the first exemplary method. However, if this has not been done by the mobile device, the location estimate can still be performed e.g. by a server performing the second exemplary aspect. As already mentioned, in case of multiple mobile payment transaction events, a position estimate is determined in each case.

According to an exemplary embodiment of the different aspects of the invention, the method comprises:
- based on the payment transaction information, determining a floor identifier of the floor on which the mobile payment transaction event took place.

The determined floor identifier can be used for matching it to a respective radio data layer. While it is generally conceivable that a floor identifier may be (directly) comprised in the payment transaction information, this will rarely be the case. Rather, the payment transaction information may allow for indirectly determining the floor identifier, on which the mobile payment transaction event took place. For instance, this may be the case, if the payment transaction information comprises the name of the business or a transaction ID (which in turn allows determining the name of the business, as described above). In case of multiple mobile payment transaction events, a respective floor identifier may be determined in each case.

According to an exemplary embodiment of the different aspects of the invention, the determining of a floor identifier of the floor on which the mobile payment transaction event took place comprises identifying a matching entry in a point of interest database by comparing information, in particular a name of the business at which the mobile payment transaction event took place, obtained based on the payment transaction information and information, in particular names of places of interest, comprised by the point of interest database.

A matching entry of the point of interest (POI) database is understood to mean that the entry comprises identical or similar information compared to the information obtained based on the payment transaction information. For instance, a matching entry may be identified by means of a string comparison of the information obtained based on the payment transaction information and the information in the POI database. Information, such as two strings, may be considered similar if, for instance, the edit distance between the two strings is below a predefined threshold. In case multiple matching entries are identified, the best match (e.g. entry with the most similar information, or the entry with a location closest to the determined location estimate of the mobile device) may be selected. In this way, an entry in the POI database can be assigned to a mobile payment transaction event.

The term database or POI database is understood broadly. While a database may denote a classical database (such as a table, a relational or non-relational database, such as an SQL/NoSQL/NewSQL database), the term database may generally relate to any kind of dataset, data stock, data pool or data source which may provide information on places or points of interest. As an example, the internet or data sources accessible via the internet may also be considered as a POI database.

In an example, it may be tried to find a matching entry in a classical POI database, which may be stored locally. If a matching entry cannot be found or at least not with sufficient certainty, or if the entry does not provide any floor identifier, another source (such as the internet) may be used for trying to find a matching entry providing a floor identifier.

As already mentioned before, information obtained based on the payment transaction information, such as a business name, may also comprise (coarse) information on the location (e.g. the city, street or district) on the location of the mobile payment transaction event. Such information may also be taken into account for finding a matching entry in the POI database.

A POI database may be provided in different formats. For instance, a POI database may be stored and provided as ASCII text, a graphic or a table, just to name some examples. In one example, the POI database may be provided as a venue map. A POI database is generally available for many places and often comprises human readable floor identifiers for points of interests, so that the POI database in combination with the payment transaction information may be considered as a source for obtaining a floor identifier of the floor on which the mobile transaction payment event has taken place.

According to an exemplary embodiment of the different aspects of the invention, the identifying of a matching entry in a point of interest database is performed only for those points of interest of the point of interest database with a location in a certain vicinity of a determined location estimate of the mobile device.

The location estimate of the mobile device may be determined as mentioned before, e.g. either by the mobile device itself (e.g. as part of the first exemplary method) or by a different apparatus, such as a remote server (e.g. as part of the second exemplary method). For instance, only those points of interest of the POI database may be considered which are within a predetermined distance or radius of the location estimate of the mobile device. Thus, the search space in the POI database for determining the matching entry can be reduced efficiently.

According to an exemplary embodiment of the different aspects of the invention, the determining of a floor identifier of the floor on which the mobile payment transaction event took place comprises obtaining the floor identifier from the identified entry of the point of interest database.

If the identified matching entry comprises a floor identifier, the floor identifier is obtained and it may be assumed that the mobile payment transaction event has taken place on a floor denoted by the obtained floor identifier. If it is determined, however, that the POI database does not comprise a floor identifier for the identified matching entry, the payment event may be classified as not useful and the method may be terminated.

According to an exemplary embodiment of the different aspects of the invention, the method comprises:
- based on the obtained radio measurement data, determining a radio data layer of the radio map; and
- associating the determined floor identifier and the determined radio data layer.

By associating the determined floor identifier and the determined radio data layer, the radio data layer of the radio map can be mapped to the floor identifier. For determining the radio data layer a respective radio map may be obtained. However, a radio map may already be available, because the radio map may already have been used for determining a position estimate of the mobile device, as mentioned before. The determined radio data layer can be considered as the radio data layer, on which the one or more radio measurements comprised by radio measurement data were taken according to the radio map. In other words, this action determines the radio data layer in which the mobile device is positioned according to radio measurement data with respect to the radio data layers of the radio map.

According to an exemplary embodiment of the different aspects of the invention, the method comprises:
- mapping one or more radio data layers of the radio map to one or more floor identifiers based on one or more determined floor identifiers and associated radio data layers.

In one example, the mapping may be completed by the above described association of a respective radio data layer of a radio map and a respective floor identifier. In another example, statistical approaches may be used. For instance, the above described steps may be performed for a plurality of mobile payment transaction events. The final mapping could then be based on these multiple results, e.g. mapping the radio data layer and the floor identifier which are associated most often for instance.

It is noted that it is generally possible to only map single radio data layers and floor identifiers of a building. It is not necessary to obtain mobile payment transaction events for each radio data layer or floor of a building, so that all radio data layers are mapped to a respective floor identifiers in the above described way. For instance, it may be possible that for certain radio data layers no association or mapping could be completed, e.g. because no mobile payment transaction event was detected or because the POI database does not comprise a floor identifier for a certain business. Nevertheless, it may be possible to complete the mapping for a building, as will be described below.

According to an exemplary embodiment of the different aspects of the invention, the method comprises:
- for a part of the radio data layers of the radio map, mapping a radio data layer to a floor identifier based on knowledge or an assumption on the mapping and/or the distribution of floor identifiers.

This is advantageous if not all of the radio data layers are or can be mapped to floor identifiers based on payment transaction information and associated radio measurement data. In that case, for some or all of the remaining (i.e. unmapped) radio data layers, a knowledge or assumption on the mapping and/or the distribution of floor identifiers can be used. For instance, it may be known or assumed that the mapping is bijective. For instance, it may be known or assumed that there is a constant offset throughout the mapping for a building. For instance, it may be known or assumed that there is a uniform distribution of floor identifiers. Such an approach may in particular work well for one or more unmapped radio data layers between two radio data layers already mapped to floor identifiers. If there are as many unmapped radio data layers as unmapped floor identifiers between the mapped radio data layers and floor identifiers, the mapping would be unambiguous and could be continued or completed for the radio data layers in between, for instance.

If some or all of the radio data layers of a radio map are mapped to floor identifiers, the radio map may be updated, so that when the radio map is used for positioning it can use the human readable floor identifiers ("B1", "UG", "G", "1" etc.) e.g. for showing the correct floor of an indoor (geographic) map, which uses the floor identifiers, to the end user.

In one example, the radio map may be updated based on the mapping and the floor identifiers may be incorporated into the radio map.

Other features of the invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not drawn to scale and that they are merely intended to conceptually illustrate the structures and procedures described herein.

### BRIEF DESCRIPTION OF THE DRAWINGS

- Fig. 1: is a block diagram of a system with exemplary apparatuses according to the invention;
- Fig. 2: is a block diagram of an exemplary apparatus according to the different aspects of the invention;
- Fig. 3: is a block diagram of an exemplary mobile device according to the different aspects of the invention;
- Fig. 4: is a flow chart illustrating an example embodiment of the first exemplary method according to the invention;
- Fig. 5: is a flow chart illustrating an example embodiment of the second exemplary method according to the invention; and
- Fig. 6: is a schematic illustration of examples of tangible storage media according to the invention.

### DETAILED DESCRIPTION OF EXAMPLE EMBODIMENTS OF THE INVENTION

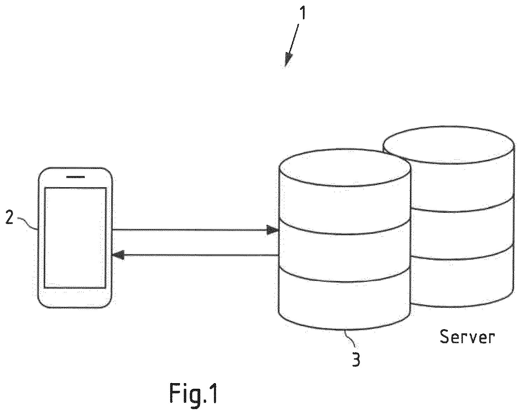

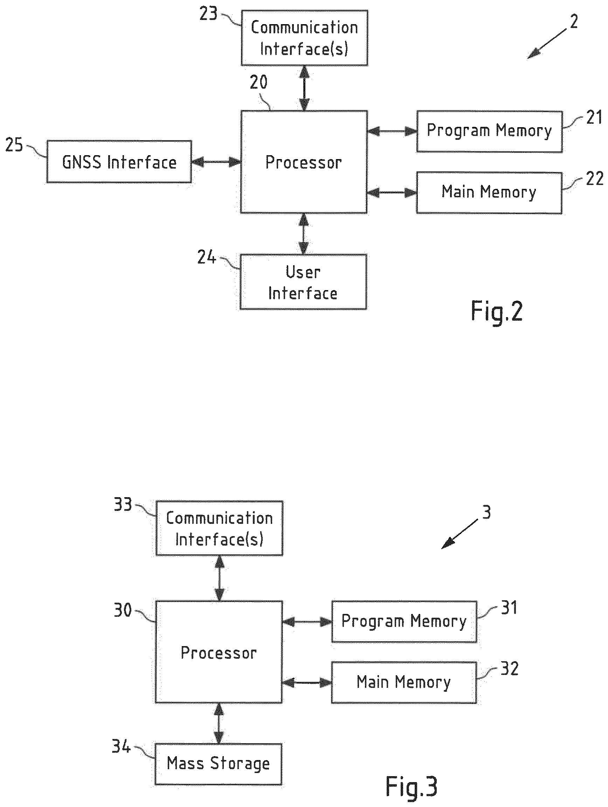

Fig. 1 is a block diagram of a system 1 of a mobile device 2 and a server 3, which may both be exemplary embodiments of an apparatus according to the invention and which may separately or together perform exemplary embodiments of the method according to the invention. For instance, the mobile device 2 may perform the first exemplary method. For instance, the server 3 may perform the second exemplary method. The details of mobile device 2 and server 3 are described with respect to Fig. 2, which is an exemplary block diagram of the mobile device 2 of Fig. 1, and Fig. 3, which is an exemplary block diagram of the server 3 of Fig. 1.

As an example, the mobile device 2 may be a part of or may be a cellular phone, a personal digital assistant, a laptop computer, a tablet computer or a wearable.

More specifically, mobile device 2 may be capable of performing a mobile payment transaction and taking part in a mobile payment transaction event. For this, the mobile device 2 may interact with a mobile payment transaction terminal (e.g. via NFC technology). Moreover, mobile device 2 may be used for taking radio measurements and obtaining position estimates of the mobile device.

Also, mobile device 2 may be seen as an example of a device which may be positioned based on an updated radio map with human readable floor identifiers as described herein. For this, the mobile device may likewise observe and measure its radio environment. Based on such measurements and a radio map, the mobile device 2 and/or the server 3 may then be able to determine the position of the mobile device 2 and to determine the correct floor identifier.

Server 3 may be a back end server located remote from mobile device 2. Server 3 may also comprise multiple devices and/or may be realized as a computer cloud, for instance. Server 3 may in particular store manually collected and crowdsourced radio fingerprints and radio maps for positioning purposes. Server 3 may also generate and update radio maps. Further, server 3 may distribute generated radio maps to mobile devices or determine positioning estimates of mobile devices based on generated radio maps.

Turning now to Fig. 2, mobile device 2 is capable of performing mobile payment transactions and of taking radio measurements of its radio environment (e.g. by performing a WLAN scan). The mobile device 2 may be capable of sending payment transaction information and radio measurement data to server 3. These and other capabilities of the mobile device 2 will also be described below.

The mobile device 2 comprises a processor 20. Processor 20 may represent a single processor or two or more processors, which are for instance at least partially coupled, for instance via a bus. Processor 20 executes a program code stored in program memory 21 (for instance program code causing mobile device 2 to perform embodiments of the methods according to the invention (or parts thereof), when executed on processor 20), and interfaces with a main memory 22. Some or all of memories 21 and 22 may also be included into processor 20. One of or both of memories 21 and 22 may be fixedly connected to processor 20 or at least partially removable from processor 20, for instance in the form of a memory card or stick. Program memory 21 may for instance be a nonvolatile memory. It may for instance be a FLASH memory (or a part thereof), any of a ROM, PROM, EPROM and EEPROM memory (or a part thereof) or a hard disc (or a part thereof), to name but a few examples. Program memory 21 may also comprise an operating system for processor 20. Program memory 21 may for instance comprise a first memory portion that is fixedly installed in mobile device 2, and a second memory portion that is removable from mobile device 2, for instance in the form of a removable SD memory card. Main memory 22 may for instance be a volatile memory. It may for instance be a RAM or DRAM memory, to give but a few non-limiting examples. It may for instance be used as a working memory for processor 20 when executing an operating system and/or programs. Data pertaining to mobile payment transactions and radio measurements may for instance be stored in program memory 21 and or main memory 22.

Processor 20 further controls a communication interface 23 configured to receive and/or output information. Communication interface 23 may allow communication according to various standards, in particular for wireless communication. For instance, communication interface 23 may be configured for communication with a terminal for mobile payment transactions. For this, the communication interface 23 may allow short range wireless communication, for instance communication according to a Bluetooth or Bluetooth LE standard, the NFC standard or other RFID technologies, just to name some examples. Further, communication interface 23 may be configured to send and/or receive data to/from server 3. Mobile device 2 may be configured to communicate with server 3 of system 1 (see Fig. 1). This may for instance comprise sending information such as payment transaction information, radio measurement data and/or location estimates to server 3. The communication may for instance be based on a (e.g. partly) wireless connection. The communication interface 23 may thus comprise circuitry such as modulators, filters, mixers, switches and/or one or more antennas to allow transmission and/or reception of signals, e.g. for the communication with server 3. In embodiments of the invention, communication interface 23 is inter alia configured to allow communication according to a 2G, 3G, 4G and/or 5G cellular communication system and/or a non-cellular communication system, such as for instance a WLAN network. Nevertheless, the communication route between mobile device 2 and server 3 may equally well at least partially comprise wire-bound portions. For instance, mobile device 2 and server 3 may communicate over the internet.

Processor 20 further controls a user interface 24 configured to present information to a user of mobile device 20, such as a position estimate, and/or to receive information from such a user. Specifically, mobile device 2 may be capable of visually presenting a geographic (indoor) map to the user. User interface 24 may for instance be the standard user interface via which a user of mobile device 2 controls other functionality thereof, such as making phone calls, browsing the Internet, etc.

Processor 20 may further control a GNSS interface 25 configured to receive positioning information, that is in particular (absolute) vertical and/or horizontal position information, of an GNSS such as Global Positioning System (GPS), Galileo, Global Navigation Satellite System (i.e. "Globalnaja Nawigazionnaja Sputnikowaja Sistema", GLONASS) and Quasi-Zenith Satellite System (QZSS).

The components 21-25 of mobile device 2 may for instance be connected with processor 20 by means of one or more serial and/or parallel busses.

Turning now to Fig. 3, an exemplary block diagram of server 3 of Fig. 1 is shown. Similarly to Fig. 2, server 3 comprises a processor 30. Processor 30 may represent a single processor or two or more processors, which are for instance at least partially coupled, for instance via a bus. Processor 30 executes a program code stored in program memory 31 (for instance program code causing server 3 to perform embodiments of the methods according to the invention (or parts thereof), when executed on processor 30). Processor 30 further interfaces with a main memory 32 (for instance acting as a working memory) and a mass storage 34, which may for instance store a plurality of radio maps and data received from mobile devices (such as payment transaction information and radio measurements).

Processor 30 further controls a communication interface 33 configured to receive and/or output information. For instance, server 3 may be configured to communicate with mobile device 2 of system 1, as already described with respect to Figs. 1 and 2.

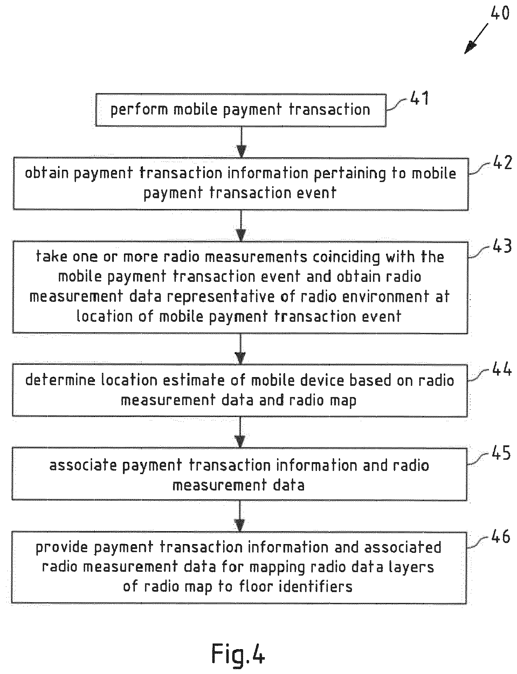

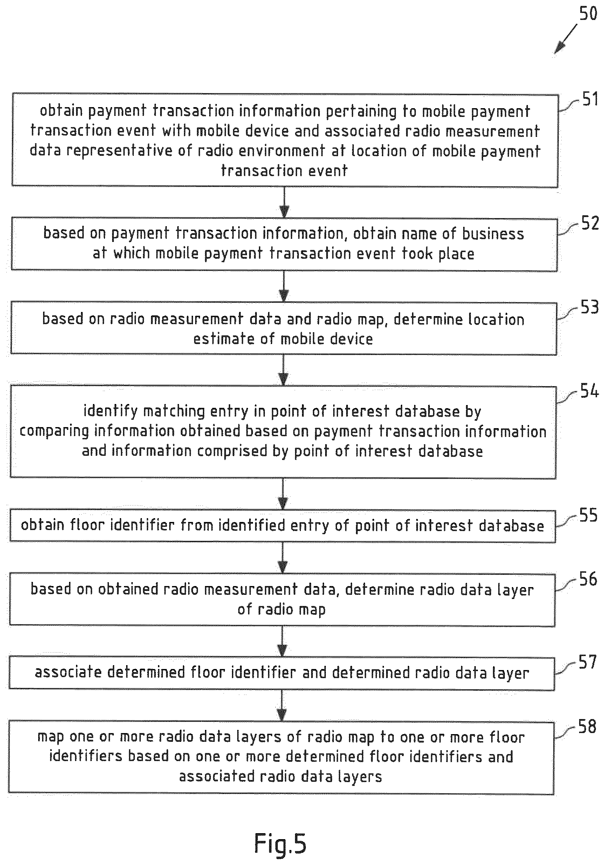

Turning now to Figs. 4 and 5, example embodiments of methods according to the invention will be described.

Fig. 4 shows flow chart 40, the actions of which are performed by a mobile device (such as mobile device 2).

The mobile device performs a mobile payment transaction (action 41). For this, the mobile deice may communicate with a mobile payment transaction terminal. Due to this mobile payment transaction event, the mobile device obtains payment transaction information pertaining to the mobile payment transaction event (action 42).

At the time of the mobile payment transaction event, one or more radio measurements are taken so that radio measurement data representative of the radio environment at the location of the mobile payment transaction event can be obtained (action 43).

Optionally, a (coarse) location estimate of the mobile device is determined e.g. based on the radio measurement data and a radio map (action 44).

The payment transaction information is associated with the radio measurement data and optionally the location estimate (action 45).

The payment transaction information and the associated radio measurement data can then be provided to a back end server for processing, i.e. for mapping radio data layers of a radio map to floor identifiers (action 46).

This mapping is described in more detail with respect to Fig. 5 showing a flow chart 50, the actions of which are performed by a server (such as server 3). Alternatively some or all of the actions of flow chart 50 can be performed on the client side (i.e. the mobile device), given that all needed information is accessible on the client side.

In action 51, the server obtains the information provided by the mobile device, i.e. the payment transaction information pertaining to the mobile payment transaction event with a mobile device and associated radio measurement data representative of a radio environment at a location of the mobile payment transaction event.

As will be described in the following, the payment transaction information and the associated radio measurement data will be used for mapping one or more radio data layers of a radio map to one or more floor identifiers.

Based on the payment transaction information, a name of a business, at which the mobile payment transaction event took place, is obtained (action 52). In one example, the business name of the place, where the payment was done, can be retrieved from the payment system (e.g. via a bank interface) using the payment transaction ID. For this, it may be necessary that the bank has opened its API for 3rd party application developers. Alternatively, such information can be available already in the transaction details, in which case there would be no need to access any bank interfaces.

In case the mobile device has not already determined and provided a location estimate (cf. action 44), a (coarse) location estimate of the mobile device can be determined based on the radio measurement data (such as a cellular, WLAN and/or Bluetooth scan) and a radio map (action 53).

Now, a matching entry in a point of interest database is identified by comparing the above identified name of the business at which the mobile payment transaction event took place and the names of places of interest comprised by the point of interest database (action 54). For this, only places of interest within certain distance from the coarse location of the mobile device may be considered. The business name and POI name matching is preferably done by a string comparison. In some cases the business name may also, at least partially, include a business address, e.g. a street and/or district name. This can further be used to find the correct POI entry in the database.

If available, from the identified entry in the point of interest database the floor identifier can then be obtained (action 55). If there is no matching entry or if the POI information does not include the required floor level information (i.e. the floor identifier), one or more other sources of POI data may be queried in order to obtain the desired floor identifier, before the event is considered not useful and the process terminates. In one example, while the POI database may not directly provide the desired floor identifier, the POI database may still provide further information which may help obtaining the floor identifier (such as a further clue on the business name or a more exact or complete spelling of the business name, for instance). This may then help if yet another (second, third etc.) source, such as the internet, is to be queried in order to obtain the desired floor identifier. In one example, a bot may be used in order to search the internet for the floor identifier.

As a result, a floor identifier of the floor on which the mobile payment transaction event took place has been determined based on the payment transaction information.

A radio data layer of the radio map is determined based on the obtained radio measurement data (action 56). For this, a radio map pertaining to the respective building may be fetched from a positioning backend. The best match is then found between the radio measurement data and the radio map. In other words, the radio measurement data is used to locate the mobile device with respect to radio map and in terms of the radio data layers (i.e. the radio map's internal floor indexing).

The determined floor identifier and the determined radio data layer are then associated (action 57). This association enables bridging the gap between the abstract building's radio data layer and the real-world human-readable floor level identifiers.

In this way a mapping of one or more radio data layers of the radio map to one or more floor identifiers based on one or more determined floor identifiers and associated radio data layers can be achieved (action 58).

If not all radio data layers and floor identifiers can be mapped in the described way, the mapping may be completed by mapping a radio data layer to a floor identifier based on knowledge or an assumption on the mapping and/or the distribution of floor identifiers.

In principle not too many samples are required to do the mapping described above. For instance, assuming a building with human-readable floors B3, B3, B1, UG, G, 1, 2, 3 (B for Basement, UG for Underground and G for Ground). In the crowd-sourced building's radio data we have the radio data layers: L0, L1, L2, L3, L4, L5, L6, L7. Now, it suffices to have a quite limited number of samples from each floor to be able to make the following mapping:
L0 → B3
L1 → B2
L2 → B1
L3 → UG
L4 → G
L5 → 1
L6 → 2
L7 → 3

When the mapping is complete at least partially, the mapping can be included in the building's radio map. Then, in the positioning phase, when a device (based on radio measurements and the radio map) is positioned e.g. to the radio data layer L4 (positioning works in the abstract radio layer domain), the user would be shown "floor G" based on the mapping.

Moreover, if the floor/layer index systems (both the building's radio data layers and the real-world floor identifiers) are ordered, and the mapping/association between them is bijective, it would be enough to determine the mapping between only a couple of radio data layers and floor identifiers to deduce the complete mapping. For instance, an offset is determined, which is or assumed to be constant for the whole mapping. This can be done based on all the available payment transaction events and statistical analysis. For example, the offset can be computed as a median of the offsets computed based on different payment transaction events. Alternatively, if an association or mapping for radio data layers and floor identifiers N and N+m is determined, the association for the radio data layers and floor identifiers in between (i.e. N+1...N+m-1) can be determined assuming a uniform distribution of the radio data layers or floor identifiers corresponding to N...N+m.

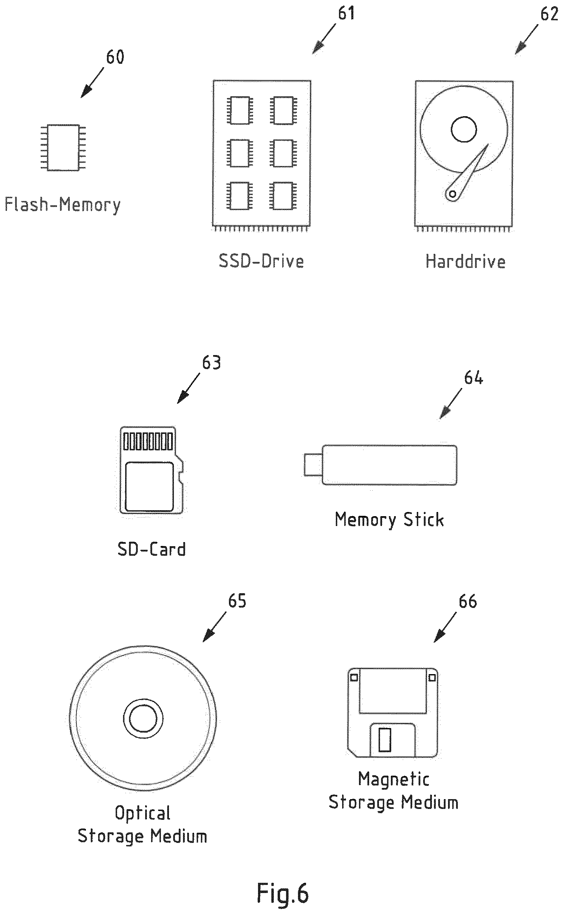

Fig. 6 is a schematic illustration of examples of tangible storage media according to the present invention that may for instance be used to implement program memory 21 of Fig. 2 and/or program memory 31 of Fig. 3. To this end, Fig. 6 displays a flash memory 60, which may for instance be soldered or bonded to a printed circuit board, a solid-state drive 61 comprising a plurality of memory chips (e.g. Flash memory chips), a magnetic hard drive 62, a Secure Digital (SD) card 63, a Universal Serial Bus (USB) memory stick 64, an optical storage medium 65 (such as for instance a CD-ROM or DVD) and a magnetic storage medium 66.

The following embodiments are also disclosed:
Embodiment 1:
   A method, performed by at least one apparatus, the method comprising:
   - obtaining payment transaction information pertaining to a mobile payment transaction event with a mobile device;
   - obtaining radio measurement data representative of a radio environment at a location of the mobile payment transaction event;
   - associating the payment transaction information and the radio measurement data; and
   - providing the payment transaction information and the associated radio measurement data for mapping radio data layers of a radio map to floor identifiers.
Embodiment 2:
   The method of embodiment 1, the method further comprising:
   - performing, by the mobile device, the mobile payment transaction.
Embodiment 3:
   The method of embodiment 1 or 2, wherein the payment transaction information comprises one or more of:
   - information representative of a name of a transaction partner involved in the mobile payment transaction event;
   - information representative of a name of a business, at which the mobile payment transaction event took place;
   - information representative of a location, at which the mobile payment transaction event took place;
   - an identifier of the mobile payment transaction event; and/or
   - a time of the mobile payment transaction event.
Embodiment 4:
   The method of any of the preceding embodiments, wherein the method further comprises:
   - taking one or more radio measurements by the mobile device coinciding with the mobile payment transaction event, the radio measurement data comprising the one or more radio measurements.
Embodiment 5:
   The method of embodiment 4, wherein the one or more radio measurements comprise one or more of:
   - an identifier of a radio node emitting an observed radio signal;
   - information on a received signal strength of an observed radio signal;
   - information on path losses of an observed radio signal;
   - information on a timing measurement of an observed radio signal; and/or
   - information on an angle of arrival of an observed radio signal.
Embodiment 6:
   The method of any of the preceding embodiments, wherein the method further comprises:
   - determining a location estimate of the mobile device based on the radio measurement data and a radio map.
Embodiment 7:
   A method, performed by at least one apparatus, the method comprising:
   - obtaining payment transaction information pertaining to a mobile payment transaction event with a mobile device and associated radio measurement data representative of a radio environment at a location of the mobile payment transaction event; and
   - using the payment transaction information and the associated radio measurement data for mapping one or more radio data layers of a radio map to one or more floor identifiers.
Embodiment 8:
   The method of embodiment 7, wherein the method comprises:
   - based on the payment transaction information, obtaining a name of a business at which the mobile payment transaction event took place.
Embodiment 9:
   The method of embodiment 7 or 8, wherein the method comprises:
   - based on the radio measurement data and a radio map, determining a location estimate of the mobile device.
Embodiment 10:
   The method of claim any of embodiments 7 to 9, wherein the method comprises:
   - based on the payment transaction information, determining a floor identifier of the floor on which the mobile payment transaction event took place.
Embodiment 11:
   The method of embodiment 10, wherein the determining of a floor identifier of the floor on which the mobile payment transaction event took place comprises identifying a matching entry in a point of interest database by comparing information, in particular a name of the business at which the mobile payment transaction event took place, obtained based on the payment transaction information and information, in particular names of places of interest, comprised by the point of interest database.
Embodiment 12:
   The method of embodiment 11, wherein the identifying of a matching entry in a point of interest database is performed only for those points of interest of the point of interest database with a location in a certain vicinity of a determined location estimate of the mobile device.
Embodiment 13:
   The method of any of embodiments 10 to 12, wherein the determining of a floor identifier of the floor on which the mobile payment transaction event took place comprises obtaining the floor identifier from the identified entry of the point of interest database.
Embodiment 14:
   The method of any of embodiments 10 to 13, wherein the method comprises:
   - based on the obtained radio measurement data, determining a radio data layer of the radio map; and
   - associating the determined floor identifier and the determined radio data layer.
Embodiment 15:
   The method of embodiment 14, wherein the method comprises:
   - mapping one or more radio data layers of the radio map to one or more floor identifiers based on one or more determined floor identifiers and associated radio data layers.
Embodiment 16:
   The method of any of embodiments 7 to 15, wherein the method comprises:
   - for a part of the radio data layers of the radio map, mapping a radio data layer to a floor identifier based on knowledge or an assumption on the mapping and/or the distribution of floor identifiers.
Embodiment 17:
   An apparatus comprising means for performing a method according to any of embodiments 1 to 16.
Embodiment 18:
   A computer program code, the computer program code, when executed by a processor, causing an apparatus to perform the method of any of the embodiments 1 to 16.
Embodiment 19:
   A non-transitory computer readable storage medium, in which computer program code is stored, the computer program code when executed by a processor causing at least one apparatus to perform the method of any of embodiments 1 to 16.

Any presented connection in the described embodiments is to be understood in a way that the involved components are operationally coupled. Thus, the connections can be direct or indirect with any number or combination of intervening elements, and there may be merely a functional relationship between the components.

Further, as used in this text, the term 'circuitry' refers to any of the following:
(a) hardware-only circuit implementations (such as implementations in only analog and/or digital circuitry)
(b) combinations of circuits and software (and/or firmware), such as: (i) to a combination of processor(s) or (ii) to portions of processor(s)/ software (including digital signal processors)), software, and memory(ies) that work together to cause an apparatus, such as a mobile phone, to perform various functions) and
(c) to circuits, such as a microprocessor(s) or a portion of a microprocessor(s), that re-quire software or firmware for operation, even if the software or firmware is not physically present.

This definition of 'circuitry' applies to all uses of this term in this text, including in any claims. As a further example, as used in this text, the term 'circuitry' also covers an implementation of merely a processor (or multiple processors) or portion of a processor and its (or their) accompanying software and/or firmware. The term 'circuitry' also covers, for example, a baseband integrated circuit or applications processor integrated circuit for a mobile phone.

Any of the processors mentioned in this text, in particular but not limited to processors of Fig. 2 and 3, could be a processor of any suitable type. Any processor may comprise but is not limited to one or more microprocessors, one or more processors) with accompanying digital signal processor(s), one or more processor(s) without accompanying digital signal processor(s), one or more special-purpose computer chips, one or more field-programmable gate arrays (FPGAS), one or more controllers, one or more application-specific integrated circuits (ASICS), or one or more computer(s). The relevant structure/hardware has been programmed in such a way to carry out the described function.

Moreover, any of the actions described or illustrated herein may be implemented using executable instructions in a general-purpose or special-purpose processor and stored on a computer-readable storage medium (e.g., disk, memory, or the like) to be executed by such a processor. References to 'computer-readable storage medium' should be understood to encompass specialized circuits such as FPGAs, ASICs, signal processing devices, and other devices.

It will be understood that all presented embodiments are only exemplary, and that any feature presented for a particular exemplary embodiment may be used with any aspect of the invention on its own or in combination with any feature presented for the same or another particular exemplary embodiment and/or in combination with any other feature not mentioned. It will further be understood that any feature presented for an example embodiment in a particular category may also be used in a corresponding manner in an example embodiment of any other category.

## Claims

1. A method, performed by at least one apparatus, the method comprising:
- obtaining payment transaction information pertaining to a mobile payment transaction event with a mobile device;
- obtaining radio measurement data representative of a radio environment at a location of the mobile payment transaction event;
- associating the payment transaction information and the radio measurement data; and
- providing the payment transaction information and the associated radio measurement data for mapping radio data layers of a radio map to floor identifiers.

2. The method of claim 1, the method further comprising:
- performing, by the mobile device, the mobile payment transaction.

3. The method of claim 1 or 2, wherein the payment transaction information comprises one or more of:
- information representative of a name of a transaction partner involved in the mobile payment transaction event;
- information representative of a name of a business, at which the mobile payment transaction event took place;
- information representative of a location, at which the mobile payment transaction event took place;
- an identifier of the mobile payment transaction event; and/or
- a time of the mobile payment transaction event.

4. The method of any of the preceding claims, wherein the method further comprises:
- taking one or more radio measurements by the mobile device coinciding with the mobile payment transaction event, the radio measurement data comprising the one or more radio measurements.

5. The method of claim 4, wherein the one or more radio measurements comprise one or more of:
- an identifier of a radio node emitting an observed radio signal;
- information on a received signal strength of an observed radio signal;
- information on path losses of an observed radio signal;
- information on a timing measurement of an observed radio signal; and/or
- information on an angle of arrival of an observed radio signal.

6. The method of any of the preceding claims, wherein the method further comprises:
- determining a location estimate of the mobile device based on the radio measurement data and a radio map.

7. A method, performed by at least one apparatus, the method comprising:
- obtaining payment transaction information pertaining to a mobile payment transaction event with a mobile device and associated radio measurement data representative of a radio environment at a location of the mobile payment transaction event; and
- using the payment transaction information and the associated radio measurement data for mapping one or more radio data layers of a radio map to one or more floor identifiers.

8. The method of claim 7, wherein the method comprises:
- based on the payment transaction information, obtaining a name of a business at which the mobile payment transaction event took place.

9. The method of claim 7 or 8, wherein the method comprises:
- based on the radio measurement data and a radio map, determining a location estimate of the mobile device.

10. The method of claim any of claims 7 to 9, wherein the method comprises:
- based on the payment transaction information, determining a floor identifier of the floor on which the mobile payment transaction event took place.

11. The method of claim 10, wherein the determining of a floor identifier of the floor on which the mobile payment transaction event took place comprises identifying a matching entry in a point of interest database by comparing information, in particular a name of the business at which the mobile payment transaction event took place, obtained based on the payment transaction information and information, in particular names of places of interest, comprised by the point of interest database.

12. The method of claim 11, wherein the identifying of a matching entry in a point of interest database is performed only for those points of interest of the point of interest database with a location in a certain vicinity of a determined location estimate of the mobile device.

13. The method of any of claims 10 to 12, wherein the determining of a floor identifier of the floor on which the mobile payment transaction event took place comprises obtaining the floor identifier from the identified entry of the point of interest database.

14. The method of any of claims 10 to 13, wherein the method comprises:
- based on the obtained radio measurement data, determining a radio data layer of the radio map; and
- associating the determined floor identifier and the determined radio data layer.

15. The method of claim 14, wherein the method comprises:
- mapping one or more radio data layers of the radio map to one or more floor identifiers based on one or more determined floor identifiers and associated radio data layers.

16. The method of any of claims 7 to 15, wherein the method comprises:
- for a part of the radio data layers of the radio map, mapping a radio data layer to a floor identifier based on knowledge or an assumption on the mapping and/or the distribution of floor identifiers.

17. An apparatus comprising means for performing a method according to any of claims 1 to 16.

18. A computer program code, the computer program code, when executed by a processor, causing an apparatus to perform the method of any of the claims 1 to 16.

19. A non-transitory computer readable storage medium, in which computer program code is stored, the computer program code when executed by a processor causing at least one apparatus to perform the method of any of claims 1 to 16.
